# EUROPÄISCHE PATENTSCHRIFT

(11) **EP 3 702 305 B1**
(45) Veröffentlichungstag und Bekanntmachung des Hinweises auf die Patenterteilung: **06.09.2023**
(21) Anmeldenummer: 20159728.3
(22) Anmeldetag: 27.02.2020
(51) Int. Cl.: B65H 59/38, B65H 59/36, B65H 59/04, B65H 75/44, B65H 75/42, H02G 11/00

(54) **SPANNVORRICHTUNG FÜR EINE KABELGEBUNDENE ENERGIE- UND/ODER DATENÜBERTRAGUNGSSTRECKE**
TENSIONING DEVICE FOR A CABLE-BOUND ENERGY AND / OR DATA TRANSMISSION ROUTE
DISPOSITIF DE TENSION POUR UNE LIAISON DE TRANSMISSION D'ÉNERGIE ET/OU DE DONNÉES CÂBLÉE

(30) Priorität: 01.03.2019 DE 102019202826
(43) Veröffentlichungstag der Anmeldung: 02.09.2020
(73) Patentinhaber: Deere & Company, Moline, IL 61265 (US)
(72) Erfinder: PFAFFMANN, SIMON, 68163 Mannheim (DE); TARASINSKI, NICOLAI, 68163 Mannheim (DE); KEGEL, VOLKER, 68163 Mannheim (DE); DE MORAES BOOS, FELIPE, 68163 Mannheim (DE); DAUBERMANN, JULIAN, 68163 Mannheim (DE)
(74) Vertreter: Dehnhardt, Florian Christopher

(56) Entgegenhaltungen:
- EP-A1- 2 868 609
- CN-U- 208 326 908
- DE-A1- 2 457 459

## Beschreibung

Die Erfindung bezieht sich auf eine Spannvorrichtung für eine kabelgebundene Energie- und/oder Datenübertragungstrecke, mit einem auf einer Wickeltrommel gelagerten Kabelführungsseil, wobei sich die Wickeltrommel mittels eines zugehörigen elektrischen Antriebs zum Auf- und Abwickeln des Kabelführungsseils in Drehung versetzen lässt.

Eine derartige Energie- und/oder Datenübertragungstrecke in Verbindung mit einem Stromversorgungssystem für eine Fahrzeugflotte ist beispielsweise aus der DE 10 2017 217 481 A1 bekannt. Das Stromversorgungssystem umfasst eine einem ersten Flottenfahrzeug zugeordnete erste Basisstation und eine einem zweiten Flottenfahrzeug zugeordnete zweite Basisstation, wobei zwischen den beiden Basisstationen ein längenveränderliches Kabelführungsseil frei tragend gespannt ist, auf dem seinerseits ein Strom- und/oder Datenübertragungskabel in Schlaufen jeweils fester Länge mittels verschiebbarer Halteelemente geführt ist. Die erste Basisstation umfasst zur Längenveränderung des Kabelführungsseils eine Wickeltrommel, die einen Trommelkörper zur Aufnahme des Kabelführungsseils aufweist, wobei sich der Trommelkörper durch Ansteuerung eines elektromotorischen Antriebs zum Auf- und Abspulen des Kabelführungsseils in Drehung versetzen lässt. Der elektrische Antrieb ist typischerweise als elektrischer Getriebemotor ausgebildet. Eine mit dem elektrischen Getriebemotor zusammenwirkende Einrichtung zur Drehmomentsteuerung ermöglicht die Einhaltung einer vorgegebenen Seilzugspannung, sodass ein übermäßiges Durchhängen des Kabelführungsseils zwischen den Flottenfahrzeugen vermieden werden kann.

Die zur Einhaltung der vorgegebenen Seilzugspannung vorgesehene aktive Drehmomentsteuerung ist aufgrund der massebedingten Trägheit des Trommelkörpers der Wickeltrommel nicht in der Lage, auf plötzliche Abstandsänderungen zwischen den beiden Basisstationen zu reagieren. In einem solchen Fall kann es zu unerwünschten Lastspitzen innerhalb des Kabelführungsseils kommen.

Des Weiteren geht aus der DE 24 57 459 A1, die eine Spannvorrichtung gemäß dem Oberbegriff des Anspruchs 1 offenbart, eine Tragvorrichtung für Kabel und/oder Schläuche an einer teleskopisch ausfahrbaren Einrichtung hervor. Hierbei ist als Kabelträger ein Seil vorgesehen, das einenends an einem äußeren Teleskopabschnitt der ausfahrbaren Einrichtung befestigt und andernends auf einer motorbetriebenen Trommel als Bestandteil einer automatischen Spannvorrichtung aufgewickelt ist. Eine mit der Trommel zusammenwirkende Kupplung ermöglicht es, dass die Trommel entgegen einer definierten Reibungskraft gedreht werden kann, sodass das Seil von der Trommel abgewickelt werden kann, jedoch unter einer bestimmten Spannung steht, um zu verhindern, dass dieses übermäßig weit durchhängt. Die Trommel befindet sich auf einem verschiebbaren Schlitten, der sich mittels einer Feder gegenüber einem Gehäuse abgestützt, um das Seil elastisch vorzuspannen. Es ist Aufgabe der vorliegenden Erfindung, eine baulich vereinfachte Spannvorrichtung der eingangs genannten Art dahingehend auszubilden, dass diese in der Lage ist, kurzzeitige Lastspitzen innerhalb des Kabelführungsseils verlässlich abzufangen.

Diese Aufgabe wird durch eine Spannvorrichtung mit den Merkmalen des Patentanspruchs 1 gelöst.

Die Spannvorrichtung für eine kabelgebundene Energie- und/oder Datenübertragungstrecke umfasst ein auf einer Wickeltrommel gelagertes Kabelführungsseil, wobei sich die Wickeltrommel mittels eines zugehörigen elektrischen Antriebs zum Auf- und Abwickeln des Kabelführungsseils in Drehung versetzen lässt. Des Weiteren ist ein Federspeicher vorgesehen, mittels dessen sich eine federelastische Zugkraft auf einen von der Wickeltrommel abgespulten Seilabschnitt ausüben lässt, wobei der elektrische Antrieb die Wickeltrommel über eine zweigeteilte Antriebswelle mit einem ersten und zweiten Wellenabschnitt in Drehung versetzt, wobei als Federspeicher eine die beiden Wellenabschnitte verbindende Torsionsfeder vorgesehen ist.

Das im Vergleich zum trägheitsbehafteten Auf- und Abspulen des Kabelführungsseils verbesserte Reaktionsverhalten des Federspeichers ermöglicht es, kurzzeitige Lastspitzen innerhalb des Kabelführungsseils verlässlich abzufangen bzw. zu bedämpfen. Eine mögliche Beschädigung des Kabelführungsseils wie auch damit verbundener tragender Strukturen kann so ausgeschlossen werden. Der Federspeicher selbst kann als passive Feder-(Dämpfer-)Einheit ausgebildet sein, die sich mit vergleichsweise geringem technischem Aufwand verwirklichen lässt. Dabei lässt sich durch entsprechende Wahl der Federkennlinie der Torsionsfeder das Federungs- bzw. Dämpfungsverhalten des Federspeichers wunschgemäß vorgeben. Der so verwirklichte Federspeicher zeichnet sich aufgrund seiner geringen Anzahl bewegter Bauteile durch besondere Robustheit und Langlebigkeit aus.

Die Energie- und/oder Datenübertragungstrecke kann insbesondere Bestandteil eines Stromversorgungssystems für eine Fahrzeugflotte sein, wie es in der DE 10 2017 217 481 A1 beschrieben ist. Dementsprechend ist ein erstes Flottenfahrzeug mit einer ersten Basisstation sowie ein zweites Flottenfahrzeug mit einer zweiten Basisstation vorgesehen. Zwischen den beiden Basisstationen ist das Kabelführungsseil, genauer gesagt ein von der Wickeltrommel abgespulter Seilabschnitt frei tragend gespannt, auf dem seinerseits ein Strom- und/oder Datenübertragungskabel in Schlaufen jeweils fester Länge mittels verschiebbarer Halteelemente geführt ist. Hierbei trägt die eine der beiden Basisstationen die Wickeltrommel, wohingegen ein freies Ende des abgespulten Seilabschnitts wie auch des Strom- und/oder Datenübertragungskabels mit der anderen der beiden Basisstationen über eine zugehörige mechanische bzw. elektromechanische Kupplungsvorrichtung lösbar verbunden ist.

Bei den Flottenfahrzeugen handelt es sich beispielsweise um elektrisch betriebene Land- bzw. Baumaschinen, die sich in einer vorgegebenen Formation entlang einer zu bearbeitenden Feld- bzw. Bodenoberfläche fortbewegen.

Vorteilhafte Weiterbildungen der erfindungsgemäßen Spannvorrichtung gehen aus den Unteransprüchen hervor.

Die Torsionsfeder kann in Gestalt einer Schenkelfeder mit einem ersten und zweiten Schenkel ausgebildet sein, wobei der erste Schenkel mit dem ersten Wellenabschnitt und der zweite Schenkel mit dem zweiten Wellenabschnitt drehverbunden ist. Die beiden miteinander fluchtenden Wellenabschnitte verlaufen hierbei innerhalb Schenkelfeder, was zu einer besonders kompakten Bauform des Federspeichers führt.

Des Weiteren kann ein Sensormittel zur Erfassung eines zwischen den beiden Wellenabschnitten auftretenden Relativwinkels vorhanden sein. Das Sensormittel kann einen dem ersten Wellenabschnitt zugeordneten ersten Winkelencoder und einem dem zweiten Wellenabschnitt zugeordneten zweiten Winkelencoder aufweisen. Die von den Winkelencodern erzeugten Signale werden an eine Kontrolleinheit zur Auswertung übermittelt. Anhand der aus den übermittelten Signalen ableitbaren gegenseitigen Fehlstellung der beiden Wellenabschnitte kann die Kontrolleinheit in Verbindung mit der als bekannt vorausgesetzten Federkennlinie der Torsionsfeder unmittelbar auf die in dem abgespulten Seilabschnitt wirkende Zugkraft schließen.

Die mittels des jeweiligen Sensormittels gewonnene Zugkraftinformation kann zur Ausgabe von entsprechenden Bedienerhinweisen in Gestalt von Überlastwarnungen oder dergleichen herangezogen werden. Zusätzlich oder alternativ kann deren Kenntnis von der Kontrolleinheit dazu genutzt werden, den elektrischen Antrieb der Wickeltrommel derart anzusteuern, dass zur Vermeidung eines übermäßigen Durchhängens eine vorgegebene mittlere Zugkraft bzw. Seilspannung in dem abgespulten Seilabschnitt eingehalten wird.

Die erfindungsgemäße Spannvorrichtung wird im Folgenden anhand der beigefügten Zeichnungen näher erläutert. Hierbei bezeichnen übereinstimmende Bezugszeichen baulich identische oder bezüglich ihrer Funktion vergleichbare Komponenten. Es zeigen:
- Fig. 1: ein Ausführungsbeispiel der erfindungsgemäßen Spannvorrichtung mit einem als Torsionsfeder ausgebildeten Federspeicher,
- Fig. 2: eine Fahrzeugflotte mit einer Energie- und/oder Datenübertragungstrecke, die eine Spannvorrichtung gemäß der in Fig. 1 dargestellten Bauart umfasst,
- Fig. 3: ein alternatives Ausführungsbeispiel einer Spannvorrichtung mit einem mechanischen Federzylinder als Federspeicher, und
- Fig. 4: eine Variante des in Fig. 3 dargestellten Ausführungsbeispiels der Spannvorrichtung mit einem hydraulischen Federzylinder als Federspeicher.

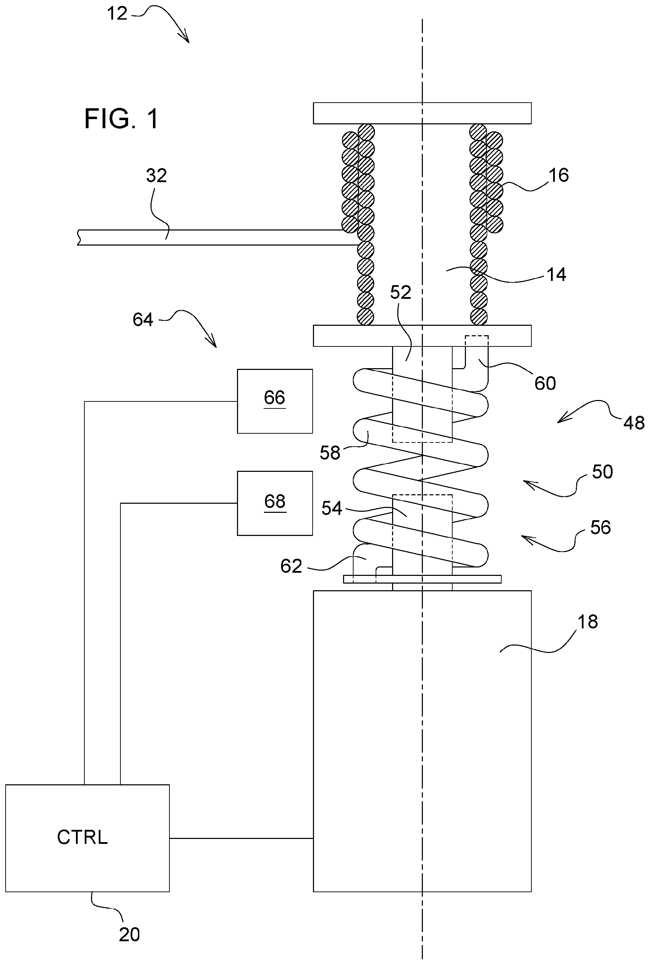

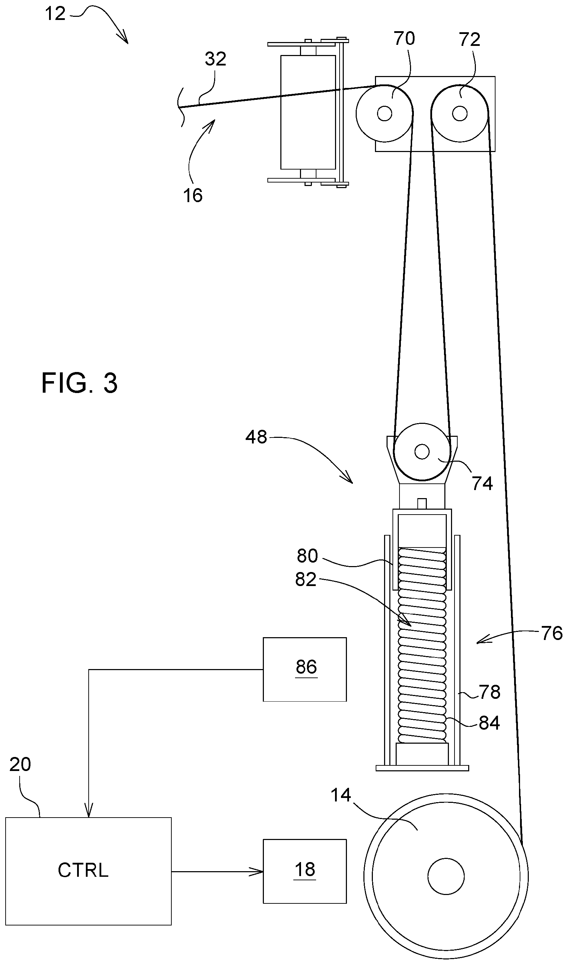

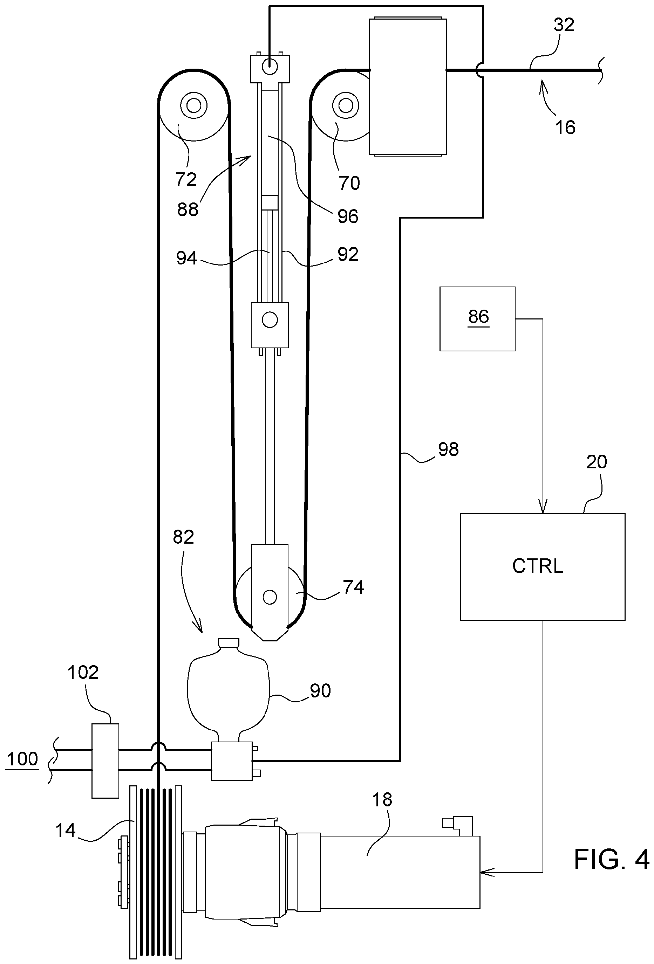

Fig. 1 zeigt ein erstes Ausführungsbeispiel der erfindungsgemäßen Spannvorrichtung für eine kabelgebundene Energie- und/oder Datenübertragungstrecke. Die In Fig. 3 und 4 wiedergegebenen Ausführungsbeispiele stellen lediglich mögliche Abwandlungen der Spannvorrichtung dar, die nicht Bestandteil der vorliegenden Erfindung sind, sondern vielmehr der Hintergrundinformation dienen sollen.

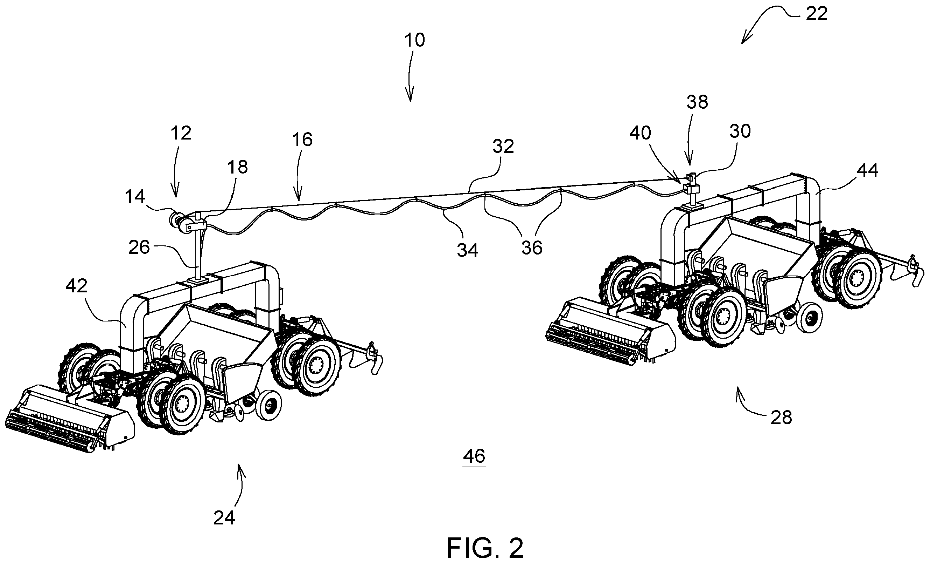

Die als Bestandteil der in Fig. 2 wiedergegebenen Energie- und/oder Datenübertragungstrecke 10 vorgesehene Spannvorrichtung 12 umfasst ein auf einer Wickeltrommel 14 gelagertes Kabelführungsseil 16, wobei sich die Wickeltrommel 14 mittels eines zugehörigen elektrischen Antriebs 18 zum Auf- und Abwickeln des Kabelführungsseils 16 auf Veranlassung einer Kontrolleinheit 20 in Drehung versetzen lässt.

Die Energie- und/oder Datenübertragungstrecke 10 ist Bestandteil eines Stromversorgungssystems einer in Fig. 2 dargestellten Fahrzeugflotte 22. Dementsprechend ist ein erstes Flottenfahrzeug 24 mit einer ersten Basisstation 26 sowie ein zweites Flottenfahrzeug 28 mit einer zweiten Basisstation 30 vorgesehen. Zwischen den beiden Basisstationen 26, 30 ist das Kabelführungsseil 16, genauer gesagt ein von der Wickeltrommel 14 abgespulter Seilabschnitt 32 frei tragend gespannt, auf dem seinerseits ein Strom- und/oder Datenübertragungskabel 34 in Schlaufen jeweils fester Länge mittels verschiebbarer Halteelemente 36 geführt ist. Hierbei trägt die erste Basisstation 26 die Wickeltrommel 14, wohingegen ein freies Ende 38 des abgespulten Seilabschnitts 32 wie auch des Strom- und/oder Datenübertragungskabels 34 mit der zweiten Basisstation 30 über eine zugehörige mechanische bzw. elektromechanische Kupplungsvorrichtung 40 lösbar verbunden ist. Bei den Flottenfahrzeugen 24, 28 handelt es sich im vorliegenden Fall um elektrisch betriebene landwirtschaftliche Erntemaschinen 42, 44. Aus Gründen der Übersichtlichkeit sind lediglich zwei Erntemaschinen 42, 44 abgebildet, es kann sich jedoch auch um eine beliebige andere Anzahl von Erntemaschinen handeln, die sich in einer vorgegebenen Formation entlang einer zu bearbeitenden Feldoberfläche 46 fortbewegen.

Wie sich Fig. 1 entnehmen lässt, weist die Spannvorrichtung 12 weiterhin einen Federspeicher 48 auf, mittels dessen sich eine federelastische Zugkraft auf den von der Wickeltrommel 14 abgespulten Seilabschnitt 32 ausüben lässt. Der Federspeicher 48 ermöglicht es, kurzzeitige Lastspitzen innerhalb des Kabelführungsseils 16 verlässlich abzufangen bzw. zu bedämpfen. Eine mögliche Beschädigung des Kabelführungsseils 16 wie auch damit verbundener tragender Strukturen (im vorliegenden Fall beispielsweise der beiden Basisstationen 26, 30) kann so ausgeschlossen werden. Der Federspeicher 48 selbst ist dabei als nachfolgend beschriebene passive Feder-(Dämpfer-)Einheit ausgebildet.

Die Wickeltrommel 14 ist mittels des elektrischen Antriebs 18 über eine zweigeteilte Antriebswelle 50 mit einem ersten und zweiten Wellenabschnitt 52, 54 in Drehung versetzbar, wobei als Federspeicher 48 eine die beiden Wellenabschnitte 52, 54 verbindende Torsionsfeder 56 vorgesehen ist. Durch entsprechende Wahl der Federkennlinie der Torsionsfeder 56 lässt sich das Federungs- bzw. Dämpfungsverhalten des Federspeichers 48 wunschgemäß vorgeben.

Die Torsionsfeder 56 ist in Gestalt einer Schenkelfeder 58 mit einem ersten und zweiten Schenkel 60, 62 ausgebildet, wobei der erste Schenkel 60 mit dem ersten Wellenabschnitt 52 und der zweite Schenkel 62 mit dem zweiten Wellenabschnitt 54 drehverbunden ist. Die beiden miteinander fluchtenden Wellenabschnitte 52, 54 verlaufen hierbei innerhalb Schenkelfeder 58, was zu einer besonders kompakten Bauform des Federspeichers 48 führt.

Des Weiteren ist ein Sensormittel 64 zur Erfassung eines zwischen den beiden Wellenabschnitten 52, 54 auftretenden Relativwinkels vorhanden. Das Sensormittel 64 weist einen dem ersten Wellenabschnitt 52 zugeordneten ersten Winkelencoder 66 und einen dem zweiten Wellenabschnitt 54 zugeordneten zweiten Winkelencoder 68 auf. Die von den Winkelencodern 66, 68 erzeugten Signale werden an die Kontrolleinheit 20 zur Auswertung übermittelt. Anhand der aus den übermittelten Signalen ableitbaren gegenseitigen Fehlstellung der beiden Wellenabschnitte 52, 54 schließt die Kontrolleinheit 20 in Verbindung mit der als bekannt vorausgesetzten Federkennlinie der Torsionsfeder 56 unmittelbar auf die in dem abgespulten Seilabschnitt 32 wirkende Zugkraft.

Fig. 3 zeigt ein alternatives Ausführungsbeispiel einer Spannvorrichtung mit einem mechanischen Federzylinder als Federspeicher.

Demgemäß weist der Federspeicher 48 ein Führungsrollenpaar 70, 72 sowie eine Umlenkrolle 74 zur Umlenkung des von der Wickeltrommel 14 abgespulten Seilabschnitts 32 entlang eines veränderlichen Umlenkwegs auf, wobei ein die Umlenkrolle 74 in Richtung einer Vergrößerung des Umlenkwegs vorspannender Federzylinder 76 vorgesehen ist. Der Federzylinder 76 umfasst ein Zylindergehäuse 78 sowie einen darin längsverschiebbar geführten Federkolben 80, wobei Zylindergehäuse 78 und Federkolben 80 über ein Federelement 82 miteinander gekoppelt sind.

Das Zylindergehäuse 78 hat im vorliegenden Fall vorrangig schützende Funktion und kann prinzipiell auch weggelassen werden.

Beispielsgemäß handelt es sich bei dem Federelement 82 zur Aufbringung der federelastischen Zugkraft um eine Schraubenfeder 84. Je nach Bauform des Federzylinders 76 handelt es sich um eine Zug- und/oder Druckfeder. Durch entsprechende Wahl der Federkennlinie der Schraubenfeder 84 lässt sich das Federungs- bzw. Dämpfungsverhalten des Federzylinders 76 den jeweiligen Erfordernissen anpassen.

Ferner ist ein Sensormittel 86 zur Erfassung einer momentanen Auslenkung des Federzylinders 76 vorgesehen. Das Sensormittel 86 weist einen induktiven Positionssensor oder einen Seilzugsensor auf. Die von dem jeweiligen Sensor erzeugten Signale werden der Kontrolleinheit 20 zur Auswertung zugeführt. Anhand des aus den zugeführten Signalen ableitbaren Auslenkungszustands des Federzylinders 76 schließt die Kontrolleinheit 20 in Verbindung mit der als bekannt vorausgesetzten Federkennlinie des Federspeichers 48 auf die in dem abgespulten Seilabschnitt 32 wirkende Zugkraft.

Fig. 4 zeigt eine Variante des in Fig. 3 dargestellten Ausführungsbeispiels der Spannvorrichtung. Dieses unterscheidet sich gegenüber dem in Fig. 3 wiedergegebenen Ausführungsbeispiel dahingehend, dass als Federspeicher anstelle eines mechanischen Federzylinders ein hydraulischer Federzylinder vorgesehen ist.

Demgemäß wird die federelastische Zugkraft mittels eines mit einem Federzylinder 88 kommunizierenden Blasenspeichers 90 aufgebracht, dessen Eigenschaften bestimmend für die Federkennlinie des Federspeichers 48 sind. Der Federzylinder 88 ist beispielsgemäß einfachwirkend ausgebildet und weist eine innerhalb eines Hydraulikzylinders 92 mit einem Hydraulikkolben 94 gebildete Arbeitskammer 96 auf, die druckseitig mit dem Gewicht des Kabelführungsseils 16 belastet wird und über eine Zuleitung 98 mit dem Blasenspeicher 90 in Verbindung steht.

Um die Federkennlinie des Federspeichers 48 anpassen zu können, lässt sich ein hydraulischer Betriebsdruck des Blasenspeichers 90 mittels einer mit einem Hydrauliksystem 100 kommunizierenden Steuerventilanordnung 102 modifizieren. Das Hydrauliksystem 100 ist Bestandteil des mit der Wickeltrommel 14 ausgestatteten ersten Flottenfahrzeugs 24.

Ungeachtet der jeweiligen Ausführungsform des Federspeichers 48 wird die mittels des jeweiligen Sensormittels 64, 86 gewonnene Zugkraftinformation zur Ausgabe von entsprechenden Bedienerhinweisen in Gestalt von Überlastwarnungen oder dergleichen herangezogen. Zusätzlich oder alternativ wird deren Kenntnis von der Kontrolleinheit 20 dazu genutzt, den elektrischen Antrieb 18 der Wickeltrommel 14 derart anzusteuern, dass zur Vermeidung eines übermäßigen Durchhängens eine vorgegebene mittlere Zugkraft in dem abgespulten Seilabschnitt 32 eingehalten wird.

## Patentansprüche

1. Spannvorrichtung für eine kabelgebundene Energie- und/oder Datenübertragungstrecke, mit einem auf einer Wickeltrommel (14) gelagerten Kabelführungsseil (16), wobei sich die Wickeltrommel (14) mittels eines zugehörigen elektrischen Antriebs (18) zum Auf- und Abwickeln des Kabelführungsseils (16) in Drehung versetzen lässt, und mit einem Federspeicher (48), mittels dessen sich eine federelastische Zugkraft auf einen von der Wickeltrommel (14) abgespulten Seilabschnitt (32) ausüben lässt, **dadurch gekennzeichnet, dass** der elektrische Antrieb (18) die Wickeltrommel (14) über eine zweigeteilte Antriebswelle (50) mit einem ersten und zweiten Wellenabschnitt (52, 54) in Drehung versetzt, wobei als Federspeicher (48) eine die beiden Wellenabschnitte (52, 54) verbindende Torsionsfeder (56) vorgesehen ist.

2. Spannvorrichtung nach Anspruch 1, **dadurch gekennzeichnet, dass** die Torsionsfeder (56) in Gestalt einer Schenkelfeder (58) mit einem ersten und zweiten Schenkel (60, 62) ausgebildet ist, wobei der erste Schenkel (60) mit dem ersten Wellenabschnitt (52) und der zweite Schenkel (62) mit dem zweiten Wellenabschnitt (54) drehverbunden ist.

3. Spannvorrichtung nach Anspruch 1 oder 2, **dadurch gekennzeichnet, dass** ein Sensormittel (64) zur Erfassung eines zwischen den beiden Wellenabschnitten (52, 54) auftretenden Relativwinkels vorhanden ist.

## Claims

1. Tensioning device for a wired energy and/or data transmission path, having a cable guide wire (16) stored on a winding drum (14), wherein the winding drum (14) can be set in rotation by means of an associated electrical drive (18) for winding and unwinding the cable guide wire (16), and having a spring accumulator (48), by means of which a resilient tensile force can be exerted on a wire portion (32) unreeled from the winding drum (14), **characterized in that** the electrical drive (18) sets the winding drum (14) in rotation via a two-part drive shaft (50) having a first and second shaft portion (52, 54), wherein a torsion spring (56) connecting the two shaft portions (52, 54) is provided as the spring accumulator (48).

2. Tensioning device according to Claim 1, **characterized in that** the torsion spring (56) is formed in the design of a leg spring (58) having a first and second leg (60, 62), wherein the first leg (60) is pivotably associated with the first shaft portion (52) and the second leg (62) is pivotably associated with the second shaft portion (54).

3. Tensioning device according to Claim 1 or 2, **characterized in that** a sensor means (64) is present for detecting a relative angle occurring between the two shaft portions (52, 54).

## Revendications

1. Dispositif de tension pour une ligne de transmission d'énergie et/ou de données filaire, avec un câble de guidage de fil (16) monté sur un tambour d'enroulement (14), le tambour d'enroulement (14) pouvant être mis en rotation au moyen d'un entraînement électrique correspondant (18) pour enrouler et dérouler le câble de guidage de fil (16), et avec un accumulateur à ressort (48), au moyen duquel une force de traction élastique peut être exercée sur une section de câble (32) dévidée du tambour d'enroulement (14),
**caractérisé en ce que**
l'entraînement électrique (18) met en rotation le tambour d'enroulement (14) par l'intermédiaire d'un arbre d'entraînement (50) divisé en deux avec une première et une deuxième section d'arbre (52, 54), un ressort de torsion (56) reliant les deux sections d'arbre (52, 54) étant prévu en tant qu'accumulateur à ressort (48).

2. Dispositif de tension selon la revendication 1, **caractérisé en ce que** le ressort de torsion (56) est réalisé sous la forme d'un ressort à branches (58) avec une première et une deuxième branche (60, 62), la première branche (60) étant reliée en rotation à la première section d'arbre (52) et la deuxième branche (62) à la deuxième section d'arbre (54).

3. Dispositif de tension selon la revendication 1 ou 2, **caractérisé en ce qu'**un moyen de détection (64) est présent pour détecter un angle relatif se produisant entre les deux sections d'arbre (52, 54).
